# EUROPEAN PATENT APPLICATION

(11) **EP 4 442 492 A1**
(43) Date of publication of application: **09.10.2024**
(21) Application number: 22901669.6
(22) Date of filing: 24.11.2022
(51) Int. Cl.: B60L 53/35, B60L 58/12, B60L 53/16

(54) **SYSTEM AND METHOD FOR CHARGING ELECTRIC VEHICLE USING MOBILE CHARGING MODULE CAPABLE OF AUTONOMOUS DRIVING**

(30) Priority: 03.12.2021 KR 20210171981
(71) Applicant: Evar Inc., Gyeonggi-do 13449 (KR)
(72) Inventor: LEE, Hun, Suwon-si Gyeonggi-do 16509 (KR); SHIN, Dong Hyuk, Seongnam-si Gyeonggi-do 13599 (KR); KIM, Ki Jae, Seoul 05809 (KR)
(74) Representative: Frenkel, Matthias Alexander
(86) International application number: PCT/KR2022/018672
(87) International publication number: WO 2023/101311

(57) **Abstract**

Provided are a system and method for charging an electric vehicle using a mobile charging module capable of autonomous driving. The system for charging an electric vehicle using a mobile charging module capable of autonomous driving according to various embodiments of the present invention comprises: a first charging module which is disposed fixed within a certain region; and a second charging module which is disposed within the certain region and performs movements in response to control instructions. The first charging module calls the second charging module upon being electrically connected to the electric vehicle, and uses the electric power of the second charging module to charge a battery of the electric vehicle upon being electrically connected to the second charging module.

## Description

### [Technical Field]

Various embodiments of the present invention relate to an electric vehicle charging system and method using a mobile charging module capable of autonomous driving.

### [Background Art]

Electric vehicles (EVs) are a future convergence technology receiving interest and investment from governments and companies around the world in line with the global green growth policy trend. Accordingly, the automobile industry is rapidly changing the focus of market demand from conventional oil-based vehicles to electric vehicles.

With the increase in demand for electric vehicles, in addition to technology not only for electric vehicles but also for infrastructure construction (charging devices, power supply grids, and the like) for smooth use of electric vehicles, many methods and technologies capable of charging a plurality of electric vehicles have been developed recently.

In general, an electric vehicle charging system in the related art is operated in a way that an electric vehicle charger is provided in a part of a space where vehicles are allowed to park, such as an underground parking lot, and a person who wants to charge an electric vehicle parks the electric vehicle in a place where the electric vehicle charger is provided and charges the electric vehicle.

However, it is difficult to find a location of an electric vehicle charger in a complex parking lot, and even when knowing the location, it is common to wander around the parking lot to look for an available charger.

In addition, since there are many cases in which the electric vehicle continues to be parked in an electric vehicle charging space provided in a parking lot even after electric vehicle charging is finished, when an available charging space is informed through whether or not the electric vehicle charging device is operating, a problem of having to find a charging space again may occur because someone else's electric vehicle is parked.

### [Disclosure]

### [Technical Problem]

The present invention has been made in order to solve the aforementioned problem with the electric vehicle charging system in the related art, and is directed to providing an electric vehicle charging system using a mobile charging module capable of autonomous driving, capable of charging an electric vehicle parked in a location adjacent to a specific point through a charging module fixedly disposed at the specific point, charging an electric vehicle without restrictions on a parking location using a movable charging module, and, also charging an electric vehicle at high speed charging by combining the fixedly disposed charging module and the movable charging module in some cases.

Problems to be solved by the present invention are not limited to those mentioned above, and other problems not mentioned will be clearly understood by those of ordinary skill in the art from the following description.

### [Technical Solution]

In order to solve the aforementioned problems, an electric vehicle charging system using a mobile charging module capable of autonomous driving according to one embodiment of the present invention includes a first charging module fixedly disposed in a predetermined area and a second charging module disposed within the predetermined area and configured to perform a movement operation according to a control command, and the first charging module calls the second charging module as the first charging module is electrically connected to an electric vehicle, and charges a battery of the electric vehicle using electric power of the second charging module as the first charging module is electrically connected to the second charging module.

In various embodiments, the first charging module may include a first connector electrically connected to the electric vehicle, a second connector electrically connected to the second charging module, a communication module configured to call the second charging module as the first charging module is connected to the electric vehicle through the first connector, a battery charged by receiving the electric power from the second charging module, and a power module configured to supply electric power stored in the battery to the electric vehicle, and the first charging module may charge the battery using the electric power supplied from the second charging module as the first charging module is electrically connected to the second charging module and supply the electric power charged in the battery to the electric vehicle through the power module.

In various embodiments, the first charging module may include a first connector electrically connected to the electric vehicle, a second connector electrically connected to the second charging module, and a communication module configured to call the second charging module as the first charging module is connected to the electric vehicle through the first connector, and the first charging module may transmit the electric power supplied from the second charging module to the electric vehicle as the first charging module is electrically connected to the second charging module.

In various embodiments, the first charging module may provide a user interface for user authentication as the first charging module is connected to the electric vehicle and call the second charging module in response to completion of a user authentication process through the user interface.

In various embodiments, the first charging module may supply a first level of electric power to the electric vehicle as the first charging module is connected to the electric vehicle, wherein the first charging module may supply a second level of electric power obtained by adding the electric power supplied from the second charging module and the first level of electric power to the electric vehicle when the first charging module is connected to the second charging module.

In various embodiments, the first charging module may be disconnected from the second charging module when it is determined that the battery of the electric vehicle is fully charged or the battery of the electric vehicle is fully chargeable within a preset time using only the first level of electric power based on a charge amount of the battery of the electric vehicle.

In various embodiments, the first charging module may charge a battery provided in the second charging module by supplying the first level of electric power to the second charging module when the battery of the electric vehicle is fully charged.

In various embodiments, the first charging module may charge a battery provided in the second charging module by supplying the first level of electric power to the second charging module for a time equal to a difference between a preset time and an expected charging time of the electric vehicle calculated based on a charge amount of the battery of the electric vehicle when the calculated expected charging time of the electric vehicle is included within the preset time.

In various embodiments, the first charging module may monitor a charge amount of a battery provided in each of a plurality of second charging modules when it is determined that the first charging module is not connected to the electric vehicle or the battery of the already connected electric vehicle is fully charged, wherein the first charging module calls any one of the plurality of second charging modules with a battery of which a charge amount is less than a preset reference value, and the first charging module may charge the battery provided in the any one second charging module by supplying a first level of electric power to the any one second charging module as the first charging module is electrically connected to the any one second charging module.

In various embodiments, the second charging module may include a battery and charge the battery by selecting any one first charging module that is not performing a charging operation among a plurality of first charging modules through short-range wireless communication with the plurality of first charging modules when a charge amount of the battery is less than a preset reference value, moving to and electrically connecting to the selected any one first charging module, and receiving electric power from the selected any one first charging module.

In various embodiments, the first charging module may supply a first level of electric power to the electric vehicle as the first charging module is connected to the electric vehicle, wherein the first charging module calculates an expected charging time of the electric vehicle based on a charge amount of the battery of the electric vehicle and determines whether to call the second charging module depending on whether the calculated expected charging time is included within a preset time.

In order to solve the aforementioned problems, a method of charging an electric vehicle using a mobile charging module capable of autonomous driving according to another embodiment of the present invention is a method of charging an electric vehicle using a mobile charging module capable of autonomous driving, which is performed using an electric vehicle charging system including a first charging module fixedly disposed in a predetermined area and a second charging module disposed within the predetermined area and configured to perform a movement operation according to a control command, including electrically connecting the electric vehicle and the first charging module, calling, by the first charging module, the second charging module, and charging a battery of the electric vehicle using electric power of the second charging module as the first charging module and the second charging module are electrically connected.

Other details of the present invention are included in the detailed description and drawings.

### [Advantageous Effects]

According to various embodiments of the present invention, there are advantages that an electric vehicle parked in a location adjacent to a specific point can be charged through a charging module fixedly disposed at the specific point, an electric vehicle can be charged without restrictions on the parking location using a movable charging module, and also an electric vehicle can be charged at high speed by combining the fixedly disposed charging module and the movable charging module in some cases.

Effects of the present invention are not limited to those mentioned above, and other effects not mentioned will be clearly understood by those of ordinary skill in the art from the description below.

### [Description of Drawings]

FIG. 1 is a view illustrating an electric vehicle charging system using a mobile charging module capable of autonomous driving according to one embodiment of the present invention.
FIG. 2 is a diagram illustrating a first charging module in the form of an energy storage system (ESS), in various embodiments.
FIG. 3 is a diagram illustrating a first charging module in a dummy form in various embodiments.
FIG. 4 is a diagram illustrating a first charging module in the form capable of autonomously performing a low-speed charging operation in various embodiments.
FIG. 5 is a flowchart of a method of charging an electric vehicle using a mobile charging module capable of autonomous driving according to another embodiment of the present invention.
FIG. 6 is a flowchart of a method of charging an electric vehicle at low and high speeds using a mobile charging module capable of autonomous driving according to still another embodiment of the present invention.
FIG. 7 is a hardware configuration diagram of a computing device that performs a method of charging an electric vehicle using a mobile charging module capable of autonomous driving according to yet another embodiment of the present invention.

### [Modes of the Invention]

Advantages and features of the present invention, and methods for achieving the advantages and features will be clarified with reference to embodiments described below in detail together with the accompanying drawings. However, the present invention is not limited to the embodiments disclosed below, and may be implemented in a variety of different forms. The present embodiments are only provided to allow disclosure of the present invention to be complete, and to completely inform those of ordinary skill in the art to which the present invention belongs of the scope of the present invention, and the present invention is merely defined by scope of the claims.

The terms used in the present specification are for the purpose of describing the embodiments only and are not intended to limit the present invention. In the present specification, the singular forms are intended to include the plural forms as well, unless the context clearly indicates otherwise. It will be further understood that the terms "comprises" and/or "comprising", when used in this specification, do not preclude the presence or addition of one or more other elements in addition to the mentioned element. Like reference numerals refer to like elements throughout the specification, and "and/or" includes each of the referenced elements and all combinations of one or more of the referenced elements. Although "first", "second", etc. are used to describe various components, the components are of course not limited by the terms. The terms are merely used to distinguish one component from another. Therefore, it goes without saying that a first component mentioned below may also be a second component within the technical spirit of the present invention.

Unless otherwise defined, all terms (including technical and scientific terms) used herein have the same meanings as commonly understood by those of ordinary skill in the art to which the present invention pertains. In addition, it will be further understood that terms, such as those defined in commonly used dictionaries, will not be interpreted in an idealized or overly formal sense unless expressly so defined herein.

The term "unit" or "module" used in the specification refers to a hardware component such as software, FPGA, or ASIC, and the "unit" or "module" performs certain roles. However, "unit" or "module" may not be limited to software or hardware components. "Unit" or "module" may be configured to be in an addressable storage medium, or may be configured to reproduce one or more processors. Therefore, for example, "unit" or "module" includes components such as software components, object-oriented software components, class components, and task components, and includes processes, functions, attributes, procedures, sub-routines, segments of program code, drivers, firmware, micro codes, circuits, data, a database, data structures, tables, arrays, and variables. Functions provided in the components and the "unit" or "module" may be coupled with lesser numbers of components and "units" or "modules," or may be further divided into additional components and "units" or "modules."

Spatially relative terms such as "below," "beneath," "lower," "above," "upper," etc. may be used to easily describe the correlation between one component and other components as shown in the drawings. Spatially relative terms should be understood as terms that include different directions of components during use or operation in addition to directions shown in the drawings. For example, when a component shown in a drawing is turned over, a component described as "below" or "beneath" another component may be placed "above" the other component. Accordingly, the illustrative term "below" may include both downward and upward directions. A component may also be oriented in other directions, and thus spatially relative terms may be interpreted according to orientation.

In the present specification, a computer refers to all types of hardware devices including at least one processor, and may be understood as encompassing software configurations that operate on a hardware device depending on the embodiment. For example, a computer may be understood to include a smartphone, a tablet PC, a desktop, a laptop, and a user client and application running on each device, but is not limited thereto.

Hereinafter, embodiments of the present invention will be described in detail with reference to the accompanying drawings.

Each step described in this specification is described as being performed by a computer, but the subject of each step is not limited thereto, and at least part of each step may be performed in a different device depending on the embodiment.

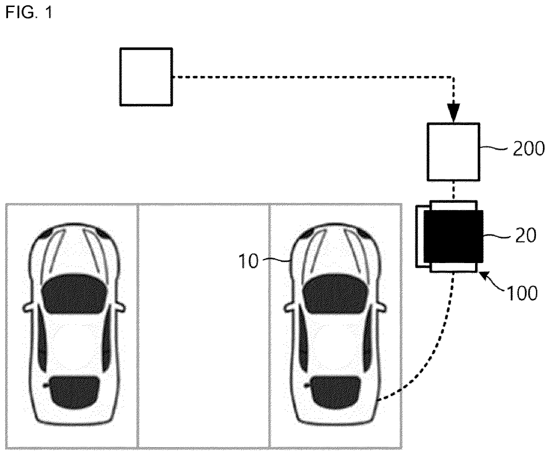

FIG. 1 is a view illustrating an electric vehicle charging system using a mobile charging module capable of autonomous driving according to one embodiment of the present invention.

Referring to FIG. 1, the electric vehicle charging system using a mobile charging module capable of autonomous driving according to one embodiment of the present invention may include a first charging module 100 and a second charging module 200.

Here, the electric vehicle charging system using a mobile charging module capable of autonomous driving illustrated in FIG. 1 is according to one embodiment, and components thereof are not limited to the embodiment illustrated in FIG. 1, and may be added, changed, or deleted as necessary.

In one embodiment, the first charging module 100 may be fixedly disposed within a predetermined area. For example, the first charging module 100 may be installed to be fixed to a pillar 20 disposed in an underground parking lot. However, the first charging module 100 is not limited thereto.

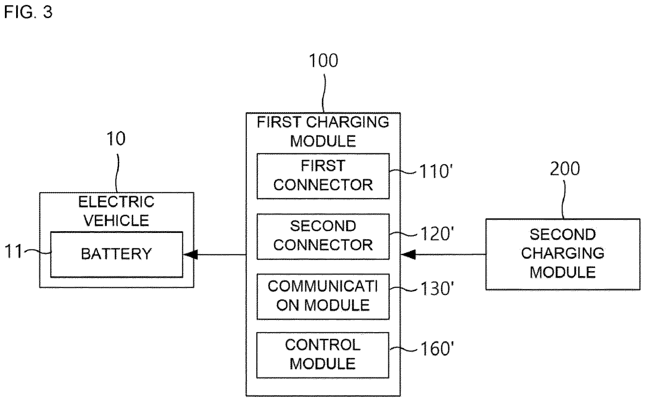

In various embodiments, the first charging module 100 may include a charging gun-shaped connector (e.g., a first connector 110 in FIG. 3) on one side to electrically connect to the electric vehicle 10, and may be electrically connected to the electric vehicle 10 through the charging gun-shaped connector. However, the first charging module 100 is not limited thereto.

In addition, the first charging module 100 may include a docking socket-shaped connector (e.g., a second connector 120 in FIG. 3) on the other side, and may be electrically connected to the second charging module 200 through the docking socket-shaped connector. However, the first charging module 100 is not limited thereto.

In one embodiment, the second charging module 200 may be disposed within a predetermined area, and may perform a movement operation according to a control command. For example, the second charging module 200 may include a separate movement means, and when receiving a call from the outside, may set a location where the call is received as a destination point and perform a movement operation to move along a path from a current location to the destination point through the movement means.

In various embodiments, the second charging module 200 may be connected to the first charging module 100 to supply electric power to the first charging module 100, but is not limited thereto, and in some cases, may be directly connected to the electric vehicle 10 to directly supply electric power to the electric vehicle 10.

Here, the second charging module 200 may be a portable energy storage system (ESS) module that has a large capacity battery therein and supplies electric power stored in the battery to the outside through a power module, but is not limited thereto.

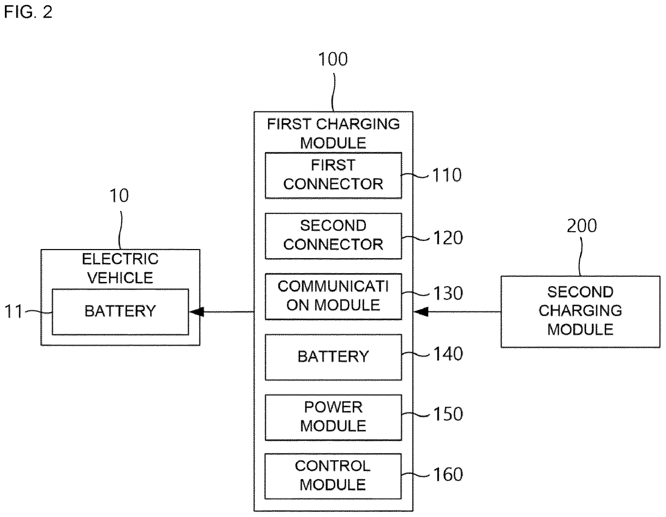

In addition, here, the first charging module 100 and the second charging module 200 have the same configuration, with only the difference in the shape or installation method (e.g., fixed or mobile) of housings containing respective components, but are not limited thereto. Hereinafter, various forms of the first charging module 100 will be described with reference to FIGS. 2 to 4.

FIG. 2 is a diagram illustrating a first charging module in the form of an energy storage system (ESS), in various embodiments.

Referring to FIG. 2, a first charging module 100 according to a first embodiment, that is, the first charging module 100 in the form of ESS, may include a first connector 110, a second connector 120, a communication module 130, a battery 140, a power module 150, and a control module 160. However, the first charging module 100 is not limited thereto.

In one embodiment, the first connector 110 may be implemented in the form of a charging gun and the first charging module 100 may be electrically connected to an electric vehicle 10 through the first connector 110. However, the first charging module 100 is not limited thereto.

In one embodiment, the second connector 120 may be implemented in the form of a docking socket and the first charging module 100 may be electrically connected to the second charging module 200 through the second connector 120. Here, the second connector may be formed in a DC combo form, but is not limited thereto.

In one embodiment, the communication module 130 may call the second charging module 200. For example, when the communication module 130 is connected to the electric vehicle 10 through the first connector 110, the communication module 130 may call the second charging module 200 located in an adjacent location through a short-range wireless communication method (e.g., Bluetooth or the like). Here, the communication module 130 may be a supply equipment communication controller (SECC), but is not limited thereto.

In one embodiment, the battery 140 may be a built-in battery provided inside the first charging module 100, and may store electric power supplied from the second charging module 200 connected through the second connector 120.

In one embodiment, the power module 150 may convert the electric power supplied from the second charging module 200 and transmit the converted electric power to the battery 140, and convert the electric power stored in the battery 140 and supply the converted electric power to the electric vehicle 10.

In one embodiment, the control module 160 may output control commands for controlling the operation of each component (e.g., the first connector 110, the second connector 120, the communication module 130, the battery 140, and the power module 150) included in the first charging module 100. For example, when an electrical connection to the electric vehicle 10 is detected through the first connector 110, the control module 160 may control the communication module 130 to output a call signal to the second charging module 200. To this end, the first charging module 100 may further include a separate control power source (e.g., a 12 V power source).

That is, the first charging module 100 according to the first embodiment may be implemented in the form of charging the battery 140 using the electric power supplied from the second charging module 200 as the first charging module 100 is electrically connected to the second charging module 200 and supplying the electric power charged in the battery 140 to the electric vehicle through the power module 150.

FIG. 3 is a diagram illustrating a first charging module in a dummy form in various embodiments.

Referring to FIG. 3, a first charging module 100' according to a second embodiment, that is, a first charging module 100' in a dummy form, may include a first connector 110', a second connector 120', a communication module 130', a battery 140', a power module 150', and a control module 160'. However, the first charging module 100' is not limited thereto.

In one embodiment, the first connector 110' may be implemented in the form of a charging gun and the first charging module 100' may be electrically connected to an electric vehicle 10 through the first connector 110'. Here, the first connector 110' according to the second embodiment may be implemented in the same form as the first connector 110 according to the first embodiment, but is not limited thereto.

In one embodiment, the second connector 120' may be implemented in the form of a docking socket, and the first charging module 100' may be electrically connected to the second charging module 200 through the second connector 120'. Here, the second connector 120' according to the second embodiment may be implemented in the same form as the second connector 120 according to the first embodiment, but is not limited thereto.

In one embodiment, the communication module 130' (e.g., a supply equipment communication controller (SECC)) may call the second charging module 200. Here, the communication module 130' according to the second embodiment may be implemented in the same form as the communication module 130 according to the first embodiment, but is not limited thereto.

In one embodiment, the control module 160' may output control commands for controlling the operation of each component (e.g., the first connector 110', the second connector 120', and the communication module 130') included in the first charging module 100'. Here, the control module 160' according to the second embodiment may be implemented in the same form as the control module 160 according to the first embodiment.

That is, the first charging module 100' according to the second embodiment may be implemented in the form of transmitting electric power supplied from the second charging module 200 to the electric vehicle 10 as the first charging module 100' is electrically connected to the second charging module 200.

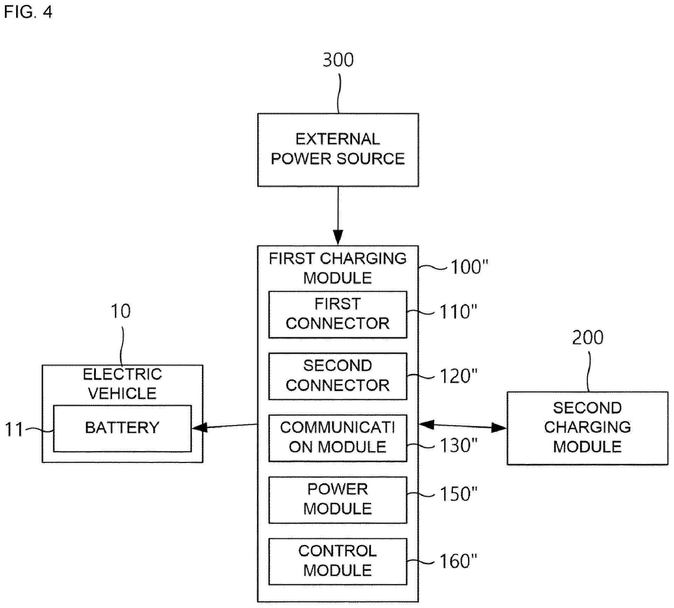

FIG. 4 is a diagram illustrating a first charging module in the form capable of autonomously performing a low-speed charging operation in various embodiments.

Referring to FIG. 4, a first charging module 100" according to a third embodiment, that is, the first charging module 100" in the form capable of a low-speed charging operation, may include a first connector 110", a second connector 120", a communication module 130", a power module 150", and a control module 160". However, the first charging module 100" is not limited thereto.

In one embodiment, the first connector 110" may be implemented in the form of a charging gun, and the first charging module 100" may be electrically connected to an electric vehicle 10 through the first connector 110". Here, the first connector 110" according to the third embodiment may be implemented in the same form as the first connector 110 according to the first embodiment, but is not limited thereto.

In one embodiment, the second connector 120" may be implemented in the form of a docking socket, and the first charging module 100" may be electrically connected to the second charging module 200 through the second connector 120". Here, the second connector 120" according to the third embodiment may be implemented in the same form as the second connector 120 according to the first embodiment, but is not limited thereto.

In one embodiment, the communication module 130" (e.g., a supply equipment communication controller (SECC)) may call the second charging module 200. Here, the communication module 130" according to the third embodiment may be implemented in the same form as the communication module 130 according to the first embodiment, but is not limited thereto.

In one embodiment, the power module 150" may convert electric power supplied from an external power source 300 and supply the converted electric power to the electric vehicle 10. For example, the power module 150" may receive 22 kW AC 3-phase power supplied from the external power source 300 and convert the 22 kW AC 3-phase power into 20 kW DC to supply electric power for low-speed charging to the electric vehicle 10. To this end, the power module 150" may include an AC/DC converter.

In addition, the power module 150" may supply electric power for high-speed charging to the electric vehicle 10 by adding the electric power supplied from the second charging module 200 and the electric power supplied through the external power source 300.

In one embodiment, the control module 160" may output control commands for controlling the operation of each component (e.g., the first connector 110", the second connector 120", the communication module 130", and the power module 150") included in the first charging module 100". Here, the control module 160" according to the third embodiment may be implemented in the same form as the control module 160 according to the first embodiment.

That is, the first charging module 100" according to the third embodiment may convert the electric power supplied from the external power source 300 and provide the converted electric power as the first charging module 100" is connected to the electric vehicle 10, thereby allowing low-speed charging of the electric vehicle 10, and may provide the electric power obtained by adding the electric power supplied from the external power source 300 and the electric power supplied from the second charging module 200 as the second charging module 200 is connected, thereby allowing high-speed charging of the electric vehicle 10.

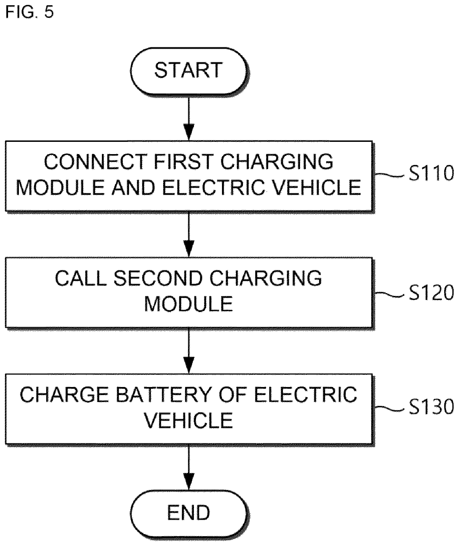

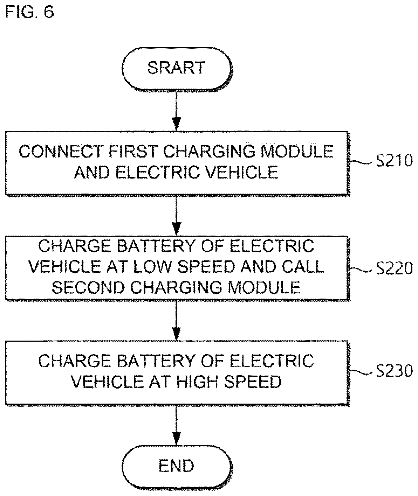

Here, the first charging module 100 according to the first embodiment, the first charging module 100' according to the second embodiment, and the first charging module 100" according to the third embodiment are each described as including different components, but are not limited thereto, and one first charging module including all components included in each of the first charging module 100 according to the first embodiment, the first charging module 100' according to the second embodiment, and the first charging module 100" according to the third embodiment may be implemented, where the one first charging module may be implemented in such a way that only specific components are selectively driven depending on an operating state. For example, when it is intended to operate the first charging module in a dummy form, only the first connector, the second connector, the communication module, and the control module may be controlled to operate, and when it is intended to operate the first charging module in a low-speed/high-speed charging mode, the first connector, the second connector, the communication module, the power module, and the control module may be controlled to operate. Hereinafter, with reference to FIGS. 5 and 6, a method of charging an electric vehicle using a mobile charging module capable of autonomous driving will be described.

FIG. 5 is a flowchart of a method of charging an electric vehicle using a mobile charging module capable of autonomous driving according to another embodiment of the present invention.

The method of charging an electric vehicle using a mobile charging module capable of autonomous driving illustrated in FIG. 5 is described as being performed by a computing device 400. Here, the computing device 400 may refer to a control module 160 provided in each of a first charging module 100 and a second charging module 200 to control the operation of each charging module, but is not limited thereto, and the computing device 400 may be a computing hardware device that is separately provided outside the first charging module 100 and the second charging module 200 to perform the method of charging an electric vehicle using a mobile charging module capable of autonomous driving.

In addition, in some cases, the method of charging an electric vehicle using a mobile charging module capable of autonomous driving may be implemented in the form of using the control module 160 provided in each charging module to control the operation of the first charging module 100 and the second charging module 200 together with the computing device 400 that is separately provided externally.

In addition, before performing the method of charging an electric vehicle using a mobile charging module capable of autonomous driving according to FIG. 5, the computing device 400 may provide a user interface (UI) for outputting usage status and power reserve status of each of a plurality of first charging modules 100 and a plurality of second charging modules 200 provided in a predetermined area, information about places where an electric vehicle may be charged, and the like to a user terminal or a display device provided in the predetermined area, and in this way, may assist the user so that the user is able to more easily and conveniently use the method of charging an electric vehicle using a mobile charging module capable of autonomous driving.

Referring to FIG. 5, in step S 110, the computing device 400 may detect a connection between the first charging module 100 and the electric vehicle 10. For example, a user who wants to charge the electric vehicle 10 connects the first connector 110 of the first charging module 100 and a connector of the electric vehicle 10, thereby electrically connecting the first charging module 100 and an electric vehicle 10, and the computing device 400 may determine whether the first charging module 100 and the electric vehicle 10 are connected through an electrical connection state between the first charging module 100 and the electric vehicle 10.

Here, the first charging module 100 may be the first charging module 100 according to the first embodiment illustrated in FIG. 2 and the first charging module 100' according to the second embodiment illustrated in FIG. 3, but is not limited thereto.

In step S120, when it is determined that the first charging module 100 and the electric vehicle 10 are connected through step SI 10, the computing device 400 may call the second charging module 200.

In various embodiments, when it is determined that the first charging module 100 and the electric vehicle 10 are connected, the computing device 400 may call a second charging module 200 at the most adjacent location among the plurality of second charging modules 200 that are not connected to other first charging modules 100 with top priority.

In this case, the computing device 400 may filter the second charging module 200 to be called in consideration of a charge amount of a battery of the electric vehicle 10 (e.g., may filter a second charging module 200 that is difficult to supply enough electric power to charge the battery of the electric vehicle 10).

In various embodiments, when it is determined that the first charging module 100 and the electric vehicle 10 are connected, the computing device 400 may call a second charging module 200 with a battery having the largest charge amount among the plurality of second charging modules 200 that are not connected to other first charging modules 100 with priority. However, the calling of the computing device 400 is not limited thereto.

In various embodiments, when a display is provided in at least a portion of the first charging module 100, the computing device 400 may provide a user interface (UI) for user authentication through the display as it is determined that the first charging module 100 and the electric vehicle 10 are connected, and may call the second charging module 200 in response to the user performing a user authentication procedure through the UI.

In various embodiments, when the display is not provided in at least a portion of the first charging module 100, the computing device 400 may be connected to the user terminal through a network, may provide the UI for user authentication to the user terminal, and may call the second charging module 200 in response to the user performing the user authentication procedure through the UI.

Here, the user terminal may be a wireless communication device that guarantees portability and mobility, including all types of handheld-based wireless communication devices, such as a navigation, personal communication system (PCS), a global system for mobile communications (GSM), personal digital cellular (PDC), a personal handyphone system (PHS), a personal digital assistant (PDA), international mobile telecommunication (IMT)-2000, code division multiple access (CDMA)-2000, W-code division multiple access (W-CDMA), or a wireless broadband Internet (Wibro) terminal, a smartphone, a smartpad, a tablet PC, or the like, but is not limited thereto.

In addition, here, the network refers to a connection structure that allows information exchange between each node, such as a plurality of terminals and servers, and examples of the network may include a local area network (LAN), a wide area network (WAN), Internet (World Wide Web (WWW)), wired and wireless data communication networks, a telephone network, a wired and wireless television communication network, and the like. In addition, the wireless data communication network may include 3G, 4G, 5G, 3rd generation partnership project (3GPP), 5th generation partnership project (5GPP), long term evolution (LTE), world interoperability for microwave access (WIMAX), Wi-Fi, Internet, a local area network (LAN), a wireless local area network (Wireless LAN), a wide area network (WAN), a personal area network (PAN), radio frequency (RF), a Bluetooth network, a near-field communication (NFC) network, a satellite broadcasting network, an analog broadcasting network, a digital multimedia broadcasting (DMB) network, and the like, but is not limited thereto.

In step S130, the computing device 400 may charge a battery 11 of the electric vehicle 10 using electric power of the second charging module 200 as the second charging module 200 called through step S 120 is electrically connected to the first charging module 100.

In various embodiments, when the first charging module 100 is implemented in the form of an ESS (e.g., the first charging module 100 according to the first embodiment illustrated in FIG. 2), the computing device 400 may charge the battery 140 of the first charging module 100 using electric power supplied from the second charging module 200 by controlling the operation of the first charging module 100, and may charge the battery 11 of the electric vehicle 10 by supplying the electric power charged in the battery 140 to the electric vehicle 10 through the power module 150.

Here, when the first charging module 100 is implemented in the form of the ESS (e.g., the first charging module 100 according to the first embodiment illustrated in FIG. 2), the electric power may be supplied to the electric vehicle 10 using the already charged battery 140 before the second charging module 200 called through step S 120 is connected to the first charging module 100.

In addition, when the first charging module 100 is implemented in the form of the ESS (e.g., the first charging module 100 according to the first embodiment illustrated in FIG. 2), the first charging module 100 may supply surplus electric power (e.g., 7 kW) to the second charging module 200 using the already charged battery 140 when the first charging module 100 is not connected to the electric vehicle 10, thereby charging a battery of the second charging module 200.

In various embodiments, when the first charging module 100 is implemented in a dummy form (e.g., the first charging module 100' according to the second embodiment illustrated in FIG. 3), the computing device 400 may transmit the electric power supplied from the second charging module 200 through a second connector 120' to the electric vehicle 10 through a first connector 110' by controlling the operation of the first charging module 100', thereby charging the battery 11 of the electric vehicle 10.

In various embodiments, the computing device 400 may provide information about the electric vehicle 10 that is being charged (e.g., vehicle number, charging state, charge amount, cost information, or the like) through the UI output through a display provided in the first charging module 100 or a display of the user terminal.

FIG. 6 is a flowchart of a method of charging an electric vehicle at low and high speeds using a mobile charging module capable of autonomous driving according to still another embodiment of the present invention.

The method of charging an electric vehicle at low and high speeds using a mobile charging module capable of autonomous driving illustrated in FIG. 6 are described as being performed by a computing device 400. Here, the computing device 400 may refer to a control module 160 provided in each of a first charging module 100 and a second charging module 200 to control the operation of each charging module, but is limited thereto, and the computing device 400 may be a computing hardware device that is separately provided outside the first charging module 100 and the second charging module 200 to perform the method of charging an electric vehicle at low and high speeds using a mobile charging module capable of autonomous driving.

In addition, in some cases, the method of charging an electric vehicle at low and high speeds using a mobile charging module capable of autonomous driving may be implemented in the form of using the control module provided in each module to control the operation of the first charging module 100 and the second charging module 200 together with the computing device 400 that is separately provided externally.

In addition, before performing the method of charging an electric vehicle at low and high speeds using a mobile charging module capable of autonomous driving according to FIG. 6, the computing device 400 may provide a user interface (UI) for outputting usage status and power reserve status of each of a plurality of first charging modules 100 and a plurality of second charging modules 200 provided in a predetermined area, information about places where an electric vehicle may be charged, and the like to a user terminal or a display device provided in the predetermined area, and in this way, the computing device 400 may assist the user so that the user is able to more easily and conveniently use the method of charging an electric vehicle at low and high speeds using a mobile charging module capable of autonomous driving.

Referring to FIG. 6, in step S210, the computing device 400 may detect a connection between the first charging module 100 and the electric vehicle 10. For example, a user who wants to charge the electric vehicle 10 connects the first connector 110 of the first charging module 100 and a connector of the electric vehicle 10, thereby electrically connecting the first charging module 100 and an electric vehicle 10, and the computing device 400 may determine whether the first charging module 100 and the electric vehicle 10 are connected through an electrical connection state between the first charging module 100 and the electric vehicle 10.

Here, the first charging module 100 may be the first charging module 100" according to the third embodiment illustrated in FIG. 4, but is not limited thereto.

In step S220, when it is determined that the first charging module 100 and the electric vehicle 10 are connected through step S210, the computing device 400 may supply a first level of electric power to the electric vehicle 10 by operating a low-speed charging mode. For example, the first charging module 100 may be connected to an external power source 300, and when it is determined that the first charging module 100 and the electric vehicle 10 are connected, the first charging module 100 may convert AC power (e.g., 22 kW AC three-phase power) supplied from the external power source 300 into a first level of DC power (e.g., 20 kW DC) and supply the converted DC power to the electric vehicle 10, thereby charging the battery 11 of the electric vehicle 10 at low speed using 20 kW DC power.

In addition, when it is determined that the first charging module 100 and the electric vehicle 10 are connected through step S210, the computing device 400 may call the second charging module 200.

In various embodiments, when it is determined that the first charging module 100 and the electric vehicle 10 are connected, the computing device 400 may call a second charging module 200 at the most adjacent location among the plurality of second charging modules 200 that are not connected to other first charging modules 100 with top priority.

In this case, the computing device 400 may filter the second charging module 200 to be called in consideration of a charge amount of a battery of the electric vehicle 10 (e.g., may filter a second charging module 200 that is difficult to supply enough electric power to charge the battery of the electric vehicle 10).

In various embodiments, when it is determined that the first charging module 100 and the electric vehicle 10 are connected, the computing device 400 may call a second charging module 200 with a battery having the largest charge amount among the plurality of second charging modules 200 that are not connected to other first charging modules 100. However, the calling of the computing device 400 is not limited thereto.

In various embodiments, when a display is provided in at least a portion of the first charging module 100, the computing device 400 may provide a user interface (UI) for user authentication through the display as it is determined that the first charging module 100 and the electric vehicle 10 are connected, and may call the second charging module 200 in response to the user performing a user authentication procedure through the UI.

In various embodiments, when the display is not provided in at least a portion of the first charging module 100, the computing device 400 may be connected to the user terminal through a network, may provide the UI for user authentication to the user terminal, and may call the second charging module 200 in response to the user performing the user authentication procedure through the UI.

In various embodiments, the computing device 400 may obtain a low-speed charging request or a high-speed charging request from the user through the UI, may supply electric power to the electric vehicle 10 using only the first charging module 100 when the low-speed charging request is obtained from the user, and may supply electric power of the first charging module 100 and the second charging module 200 to the electric vehicle 10 by calling the second charging module 200 when the high-speed charging request is obtained.

In various embodiments, the computing device 400 may supply the first level of electric power to the electric vehicle 10 through the first charging module 100 as the electric vehicle 10 and the first charging module 100 are connected, wherein the computing device may calculate an expected charging time of the electric vehicle 10 based on a charge amount of the battery of the electric vehicle 10 and determine whether to call the second charging module 200 depending on whether the calculated expected charging time is included within a preset time.

More specifically, when the preset time is one hour, the computing device 400 may determine the method of charging an electric vehicle 10 as a low-speed charging method when the expected charging time (the expected charging time until the battery of the electric vehicle 10 is fully charged as the first level of electric power is supplied to the electric vehicle 10) calculated based on the charge amount of the battery of the electric vehicle 10 is one hour or less, and accordingly, may supply electric power to the electric vehicle 10 using only the first charging module 100 without calling the second charging module 200.

Meanwhile, when the preset time is one hour, the computing device 400 may determine the method of charging an electric vehicle 10 as a high-speed charging method when the expected charging time (the expected charging time until the battery of the electric vehicle 10 is fully charged as the first level of electric power is supplied to the electric vehicle 10) calculated based on the charge amount of the battery of the electric vehicle 10 exceeds one hour, and accordingly, may supply the electric power of the first charging module 100 and the second charging module 200 to the electric vehicle 10 by calling the second charging module 200.

Here, the preset time may be a charging deadline or charging finish time of the electric vehicle 10 input by the user. For example, the preset time input by the user may be a value indicating a predetermined period of time, such as "N hours from the start of charging the electric vehicle 10," or a value indicating a specific point in time, such as "13:30."

In various embodiments, the first charging module 100 may include two first connectors 110, and when two different electric vehicles 10 are connected to the first charging module 100 through the two first connectors 110, respectively (for example, when two different electric vehicles 10 are parked on left and right sides of a pillar on which the first charging module 100 is installed and connected to the first charging module 100), the computing device 400 may supply electric power to each of two different electric vehicles 10 by calling the second charging module 200. In this case, since the electric power of the first charging module 100 and the electric power of the second charging module 200 are distributed and supplied to the two different electric vehicles 10, respectively, the electric power may be supplied only by the low-speed charging method.

In step S230, the computing device 400 may supply the first level of electric power to the electric vehicle 10 by operating a high-speed charging mode as the second charging module 200 called through step S220 and the first charging module 100 are electrically connected to the electric vehicle 10. For example, the computing device 400 may add the first level of DC power (e.g., 20 kW DC) generated as AC power supplied from the external power source 300 is converted into DC power by controlling the operation of the first charging module 100 and the electric power (e.g., 20 kW DC) supplied from the second charging module 200, thereby generating a second level of electric power (e.g., 40 kW DC), and may supply the generated second level of electric power to the electric vehicle 10, thereby charging the battery 11 of the electric vehicle 10 at high speed using 40 kW DC power.

In various embodiments, when the battery 11 of the electric vehicle 10 connected to the first charging module 100 is fully charged, the computing device 400 may control the operation of the first charging module 100 and the second charging module 200 so that the first charging module 100 is disconnected from the second charging module 200, thereby allowing the second charging module 200 to be connected to another first charging module 100 for charging another electric vehicle 10.

In addition, when it is determined that the battery of the electric vehicle 10 is fully chargeable within the preset time using only the first level of electric power supplied by the first charging module 100 based on the charge amount of the battery of the electric vehicle 10, the computing device 400 may control the operation of the first charging module 100 and the second charging module 200 to be disconnected from the second charging module 200.

In various embodiments, when the battery 11 of the electric vehicle 10 is fully charged, the computing device 400 may control the operation of the first charging module 100 to supply the first level of electric power to the second charging module 200, thereby charging the battery provided in the second charging module 200 using the electric power of the external power source 300 supplied through the first charging module 100.

In various embodiments, when the expected charging time of the electric vehicle 10 calculated based on the charge amount of the battery of the electric vehicle 10 is included within the preset time, the computing device 400 may control the first charging module 100 to supply the first level of electric power to the second charging module 200 for a time equal to a difference between the preset time and the calculated expected charging time of the electric vehicle 10, thereby charging the battery provided in the second charging module 200 using the electric power of the external power source 300 supplied through the first charging module 100. For example, when the preset time is one hour and the expected charging time of the electric vehicle 10 is 40 minutes, the computing device 400 may control the first charging module 100 to supply the first level of electric power to the second charging module 200 for 20 minutes, which is the difference between the preset time and the expected charging time.

In various embodiments, the computing device 400 may designate the first charging module 100 connected to the electric vehicle 10 as a charging base when a difference between a time preset by the user and the expected charging time of the electric vehicle 10 calculated based on the charge amount of the battery of the electric vehicle 10 exceeds a reference time (e.g., five hours), and when the charge amount of the battery of each of a plurality of second charging modules 200 falls below the reference value, may control the second charging module 200 to move to and connect to the first charging module 100 designated as the charging base so that the battery of the second charging module 200 is charged by receiving electric power from the external power source 300 through the first charging module 100 designated as the charging base.

In various embodiments, when it is determined that the specific first charging module 100 is not connected to the electric vehicle 10 or the battery of the electric vehicle 10 previously connected to the specific first charging module 100 is fully charged, the computing device 400 may monitor the amount of charge of the battery provided in each of the plurality of second charging modules 200, may select any one of the plurality of second charging modules 200 with a battery of which a charge amount is less than a preset reference value, may control the operation of the specific first charging module 100 to call the selected any one second charging module 200, and may control the operation of the specific first charging module 100 so that a first level of electric power is supplied to the any one second charging module 200 when the specific first charging module 100 and the any one second charging module 200 are connected according to a call operation of the specific first charging module 100, thereby charging the second charging module 200 with a low battery charge amount using the electric power from the external power source 300 supplied through the specific first charging module 100 when the electric vehicle 10 is not connected or the already connected electric vehicle 10 is fully charged.

In various embodiments, when the charge amount of a battery provided in a specific second charging module 200 is less than a preset reference value, the computing device 400 may control the operation of the specific second charging module 200 to select any one first charging module 100 that is not performing the charging operation among a plurality of first charging modules 100 through short-range wireless communication with the plurality of first charging modules 100, and may control the operation of the specific second charging module 200 to move to and electrically connect to the selected any one first charging module, thereby charging the battery of the specific second charging module 200 by receiving electric power from the external power source 300 through the any one first charging module.

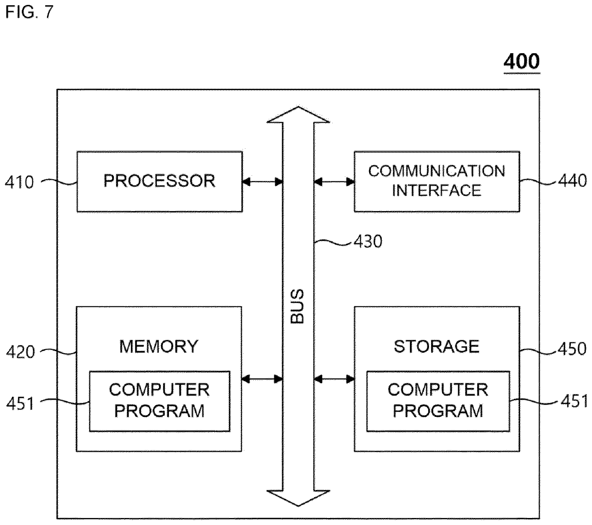

The method of charging an electric vehicle using a mobile charging module capable of autonomous driving described above has been described with reference to the flowcharts shown in the drawings. For simple description, the method of charging an electric vehicle using a mobile charging module capable of autonomous driving has been illustrated and described as a series of blocks, but the present invention is not limited to the order of the blocks, and some blocks may be performed simultaneously or in a different order than illustrated and described herein. In addition, new blocks not described in the specification and drawings may be added, or some blocks may be deleted or changed. Hereinafter, with reference to FIG. 7, a hardware configuration of a computing device 400 provided outside a first charging module 100 and a second charging module 200 and performing a method of charging an electric vehicle using a mobile charging module capable of autonomous driving and a method of charging an electric vehicle at low and high speeds using a mobile charging module capable of autonomous driving will be described.

FIG. 7 is a hardware configuration diagram of a computing device that performs a method of charging an electric vehicle using a mobile charging module capable of autonomous driving according to yet another embodiment of the present invention.

Referring to FIG. 7, in various embodiments, the computing device 400 may include one or more processors 410, a memory 420 for loading a computer program 451 performed by the processor 410, a bus 430, a communication interface 440, and a storage 450 for storing the computer program 451. Here, only components related to embodiments of the present invention are illustrated in FIG. 7. Accordingly, those of ordinary skill in the art to which the present invention pertains may see that other general-purpose components other than those illustrated in FIG. 7 may be further included.

The processor 410 controls the overall operation of each component of the computing device 400. The processor 410 may include a central processing unit (CPU), a micro processor unit (MPU), a micro controller unit (MCU), a graphic processing unit (GPU), or any type of processor well known in the art of the present invention.

In addition, the processor 410 may perform operations on at least one application or program for executing the method according to embodiments of the present invention, and the computing device 400 may include one or more processors

In various embodiments, the processor 410 may further include a random access memory (RAM) (not illustrated) and a read only memory (ROM) (not illustrated) that temporarily and/or permanently store signals (or data) processed within the processor 410. In addition, the processor 410 may be implemented in the form of a system on chip (SoC) including at least one of the graphics processing unit, the RAM, and the ROM.

The memory 420 stores various data, commands and/or information. The memory 420 may be loaded with the computer program 451 from the storage 450 to execute the methods/operations according to various embodiments of the present invention. When the computer program 451 is loaded into the memory 420, the processor 410 may perform the method/operations by executing one or more instructions constituting the computer program 451. The memory 420 may be implemented as a volatile memory such as a RAM, but the technical scope of the present disclosure is not limited thereto.

The bus 430 provides communication functions between components of the computing device 400. The bus 430 may be implemented as various types of buses, such as an address bus, a data bus, a control bus, and the like.

The communication interface 440 supports wired and wireless Internet communication of the computing device 400. In addition, the communication interface 440 may support various communication methods other than Internet communication. To this end, the communication interface 440 may include a communication module well known in the technical field of the present invention. In some embodiments, the communication interface 440 may be omitted.

The storage 450 may non-temporarily store the computer program 451. When a process of charging an electric vehicle using a mobile charging module capable of autonomous driving is performed through the computing device 400, the storage 450 may store various information necessary to provide the process of charging an electric vehicle using a mobile charging module capable of autonomous driving.

The storage 450 may include a non-volatile memory such as a read only memory (ROM), an erasable programmable ROM (EPROM), an electrically erasable programmable ROM (EEPROM) a flash memory, or the like, a hard disk, a removable disk, or any form of computer-readable recording medium well known in the art to which the present invention pertains.

The computer program 451, when loaded into the memory 420, may include one or more instructions that cause the processor 410 to perform the methods/operations according to various embodiments of the present invention. That is, the processor 410 may perform the methods/operations according to various embodiments of the present invention by executing the one or more instructions.

In one embodiment, the computer program 451 may include one or more instructions for performing a method of charging an electric vehicle using a mobile charging module capable of autonomous driving, which is performed using an electric vehicle charging system including a first charging module fixedly disposed in a predetermined area and a second charging module disposed within the predetermined area and configured to perform a movement operation according to a control command, the method including electrically connecting the electric vehicle and the first charging module, calling, by the first charging module, the second charging module, and charging a battery of the electric vehicle using electric power of the second charging module as the first charging module and the second charging module are electrically connected.

Steps of the method or algorithm described in relation to embodiments of the present invention may be implemented directly in hardware, implemented as a software module executed by hardware, or a combination thereof. The software module may reside on a random access memory (RAM), a read only memory (ROM), an erasable programmable ROM (EPROM), an electrically erasable programmable ROM (EEPROM), a flash memory, a hard disk, a removable disk, a CD-ROM, or any form of computer-readable recording medium well known in the art to which the present invention pertains.

Components of the present invention may be implemented as a program (or application) and stored in a medium to be executed in conjunction with a computer, which is hardware. Components of the present invention may be executed by software programming or software elements, and similarly, embodiments may be implemented in a programming or scripting language such as C, C++, Java, assembler, or the like, including various algorithms implemented as combinations of data structures, processes, routines or other programming constructs. Functional aspects may be implemented as algorithms executed on one or more processors.

In the above, the embodiments of the present invention have been described with reference to the accompanying drawings, and those of ordinary skill in the art to which the present invention pertains could understand that the additional or alternative embodiments may be embodied in other specific forms without departing from the technical spirit or essential features of the present invention. Therefore, it should be appreciated that the embodiments described above are intended to be illustrative in all respects and not restrictive.

## Claims

1. An electric vehicle charging system using a mobile charging module capable of autonomous driving, comprising:
a first charging module fixedly disposed in a predetermined area; and
a second charging module disposed within the predetermined area and configured to perform a movement operation according to a control command,
wherein the first charging module calls the second charging module as the first charging module is electrically connected to an electric vehicle, and charges a battery of the electric vehicle using electric power of the second charging module as the first charging module is electrically connected to the second charging module.

2. The electric vehicle charging system of claim 1, wherein the first charging module includes:
a first connector electrically connected to the electric vehicle;
a second connector electrically connected to the second charging module;
a communication module configured to call the second charging module as the first charging module is connected to the electric vehicle through the first connector;
a battery charged by receiving the electric power from the second charging module; and
a power module configured to supply electric power stored in the battery to the electric vehicle, and
the first charging module charges the battery using the electric power supplied from the second charging module as the first charging module is electrically connected to the second charging module and supplies the electric power charged in the battery to the electric vehicle through the power module.

3. The electric vehicle charging system of claim 1, wherein the first charging module includes:
a first connector electrically connected to the electric vehicle;
a second connector electrically connected to the second charging module; and
a communication module configured to call the second charging module as the first charging module is connected to the electric vehicle through the first connector, and
the first charging module transmits the electric power supplied from the second charging module to the electric vehicle as the first charging module is electrically connected to the second charging module.

4. The electric vehicle charging system of claim 1, wherein the first charging module provides a user interface for user authentication as the first charging module is connected to the electric vehicle and calls the second charging module in response to completion of a user authentication process through the user interface.

5. The electric vehicle charging system of claim 1, wherein the first charging module supplies a first level of electric power to the electric vehicle as the first charging module is connected to the electric vehicle, wherein the first charging module supplies a second level of electric power obtained by adding the electric power supplied from the second charging module and the first level of electric power to the electric vehicle when the first charging module is connected to the second charging module.

6. The electric vehicle charging system of claim 5, wherein the first charging module is disconnected from the second charging module when it is determined that the battery of the electric vehicle is fully charged or the battery of the electric vehicle is fully chargeable within a preset time using only the first level of electric power based on a charge amount of the battery of the electric vehicle.

7. The electric vehicle charging system of claim 5, wherein the first charging module charges a battery provided in the second charging module by supplying the first level of electric power to the second charging module when the battery of the electric vehicle is fully charged.

8. The electric vehicle charging system of claim 5, wherein the first charging module charges a battery provided in the second charging module by supplying the first level of electric power to the second charging module for a time equal to a difference between a preset time and an expected charging time of the electric vehicle calculated based on a charge amount of the battery of the electric vehicle when the calculated expected charging time of the electric vehicle is included within the preset time.

9. The electric vehicle charging system of claim 1, wherein the first charging module monitors a charge amount of a battery provided in each of a plurality of second charging modules when it is determined that the first charging module is not connected to the electric vehicle or the battery of the already connected electric vehicle is fully charged, wherein the first charging module calls any one of the plurality of second charging modules with a battery of which a charge amount is less than a preset reference value, and
the first charging module charges the battery provided in the any one second charging module by supplying a first level of electric power to the any one second charging module as the first charging module is electrically connected to the any one second charging module.

10. The electric vehicle charging system of claim 1, wherein the second charging module includes a battery and charges the battery by selecting any one first charging module that is not performing a charging operation among a plurality of first charging modules through short-range wireless communication with the plurality of first charging modules when a charge amount of the battery is less than a preset reference value, moving to and electrically connecting to the selected any one first charging module, and receiving electric power from the selected any one first charging module.

11. The electric vehicle charging system of claim 1, wherein the first charging module supplies a first level of electric power to the electric vehicle as the first charging module is connected to the electric vehicle, wherein the first charging module calculates an expected charging time of the electric vehicle based on a charge amount of the battery of the electric vehicle and determines whether to call the second charging module depending on whether the calculated expected charging time is included within a preset time.

12. A method of charging an electric vehicle using a mobile charging module capable of autonomous driving, which is performed using an electric vehicle charging system including a first charging module fixedly disposed in a predetermined area and a second charging module disposed within the predetermined area and configured to perform a movement operation according to a control command, the method comprising:
electrically connecting the electric vehicle and the first charging module;
calling, by the first charging module, the second charging module; and
charging a battery of the electric vehicle using electric power of the second charging module as the first charging module and the second charging module are electrically connected.
